# EUROPÄISCHE PATENTANMELDUNG

(11) **EP 1 978 048 A1**
(43) Veröffentlichungstag der Anmeldung: **08.10.2008**
(21) Anmeldenummer: 07007213.7
(22) Anmeldetag: 05.04.2007
(51) Int. Cl.: C08G 59/18, C08G 59/40, C08G 59/56

(54) **Härter für Epoxidharze, Verfahren zur Aushärtung eines Epoxidharzes sowie Verwendung des Härters**

(71) Anmelder: UPPC AG, 88487 Mietingen-Baltringen (DE)
(72) Erfinder: Hummel, Marcus, 88487 Mietingen-Baltringen (DE); Schrötz, Marcus, Dr., 88416 Ochsenhausen (DE)
(74) Vertreter: Pfenning, Meinig & Partner GbR

(57) **Zusammenfassung**

Vorliegende Erfindung betrifft einen Härter für Epoxidharze, der zum einen ein Michael-Addukt eines bifunktionellen Amins und eines Acrylsäurederivates sowie ein Addukt aus einem Epoxid und dem bifunktionellen Amin beinhaltet. Ebenso betrifft die Erfindung ein Verfahren zur Aushärtung eines Epoxidharzes durch Mischen eines noch nicht ausgehärteten Epoxidharzes mit einem Michael-Addukt eines bifunktionellen Amins und eines Acrylsäurederivates. Weiterhin werden Verwendungszwecke des erfindungsgemäßen Härters bereitgestellt.

## Beschreibung

Beschichtungen (allgemein) werden aus Beschichtungsstoffen durch deren Applikation erzeugt (DIN 55945:1990). Die Verarbeitung hat einen maßgebenden Einfluss auf die Eigenschaften der gefertigten Beschichtungen. Es gibt kalt- und heißhärtende Beschichtungen, die sich im Prinzip deutlich unterscheiden.

Kalthärtende Beschichtungen müssen bei der Umgebungstemperatur aushärten und werden nach ihrer Applikation i.d.R. nicht erhitzt (ggf. forcierte Trocknung mit erwärmter Luft); heißhärtende werden dazu erhitzt beziehungsweise eingebrannt. Die Aushärtungszeit von kalthärtenden Beschichtungen ist abhängig von deren Zusammensetzung und der Umgebungstemperatur bei der Aushärtung; sie kann bis zur Gebrauchstauglichkeit bis zu zwei Wochen und mehr dauern. Heißhärtende Beschichtungen sind nach der Einbrennzeit, die im Normalfall weniger als eine Stunde beträgt, gebrauchsfertig.

Unterschieden werden lösemittelhaltige und lösemittelfreie Beschichtungen. Aus lösemittelfreien Beschichtungsstoffen lassen sich bei einmaliger Applikation Schichtdicken bis über 2000 µm herstellen. Lösemittelhaltige Beschichtungsstoffe können nur dünnschichtig appliziert werden, da die darin enthaltenen Lösemittel über den möglichst kurz zu haltenden Weg der Schichtdicke über die Oberfläche abdunsten müssen, bevor die fortschreitende Reaktion zwischen Harz und Härter dies verhindert.

Verarbeitet werden die Beschichtungsstoffe üblicherweise durch Verfahren wie Streichen, Tauchen, Spachteln, Spritzen, Rakeln usw.

Beschichtungsstoffe werden auf unterschiedliche Materialien, wie z.B. Stahl, Aluminium, Beton appliziert. Um eine dauerhaft haltbare Beschichtung zu erzielen, sind in Abhängigkeit vom Untergrund eventuell Beschichtungsaufbauten aus mehreren Schichten (Grund-, Zwischen- und Deckbeschichtung) notwendig. Die unteren Schichten müssen nicht unbedingt Epoxidharze sein und können Lösemittel enthalten. Bis zur vollständigen Aushärtung der Deckschicht oder bei auftretenden Fehlstellen oder Beschädigungen könnten dann Stoffe aus den unteren Schichten an die Oberfläche und dadurch in die Umgebung, beispielsweise auch in Trinkwasser, migrieren. Deswegen müssen auch die Unterschichten hygienisch beurteilt werden.

Beschichtungsstoffe bestehen im Allgemeinen aus den folgenden Hauptkomponenten:
- Bindemittel (Harze und Härter)
- Pigmente und Füllstoffe
- Organische Modifizierungsmittel
- Lösemittel
- Additive und Hilfsstoffe.
- Beschleuniger

Das Bindemittel kann als "polymerspezifisch" bezeichnet werden. Alle anderen Komponenten sind dies nicht, d.h., sie kommen auch in anderen Beschichtungen vor (polymerunabhängig).

Das Bindemittel setzt sich bei Epoxidharzbeschichtungen aus Harzen und Härtern, gegebenenfalls auch unter Zusatz nicht epoxidreaktiver Weichmacher (z. B. Phthalate), polymerer Harze (z. B. Polyacrylate) oder Modifizierungsmittel (z. B. Benzylalkohol) zusammen. Derartige Beschichtungssysteme werden deshalb als Zwei-Komponenten-Reaktions-Beschichtungsstoffe bezeichnet, bei denen die Härtung durch Mischen von zwei Komponenten eingeleitet wird (DIN 55945: 1999).

Epoxidharz wird in der Vornorm DIN V 55650: 1998 definiert als synthetisches Harz, meist hergestellt aus Epichlorhydrin und Bisphenol A oder durch Epoxidierung bestimmter olefinischer Doppelbindungen. Epoxidharze enthalten mehr als eine Epoxidgruppe je Molekül. Als Härter werden Amine, Amidoamine und Aminaddukte verwendet, deren Aminwasserstoffe mit den Epoxidgruppen reagieren sowie Isocyanate, (Poly)mercaptane oder Carbonsäureanhydride.

Zur Beurteilung von Epoxidharzbeschichtungen im Kontakt mit Trinkwasser ist die Leitlinie zur hygienischen Beurteilung von Epoxidharzbeschichtungen im Kontakt mit Trinkwasser vom 14. Oktober 2005 zu beachten.

Danach dürfen für die Neuerrichtung oder die Instandhaltung von Anlagen für die Aufbereitung oder die Verteilung von Wasser für den menschlichen Gebrauch "nur Werkstoffe und Materialien verwendet werden, die in Kontakt mit Wasser Stoffe nicht in solchen Konzentrationen abgeben, die höher sind als nach den allgemein anerkannten Regeln der Technik unvermeidbar, oder den nach dieser Verordnung vorgesehenen Schutz der menschlichen Gesundheit unmittelbar oder mittelbar mindern, oder den Geruch oder Geschmack des Wassers verändern;...".

Als Voraussetzung für o. g. Zertifizierungen muss der Hersteller sowohl ein Prüfzeugnis nach dieser Leitlinie als auch ein Prüfzeugnis über die mikrobiologische Eignung des Beschichtungssystems nach dem DVGW-Arbeitsblatt W 270 vorlegen.

Die Leitlinie ist wie die Empfehlung "Gesundheitliche Beurteilung von Kunststoffen und anderen nichtmetallischen Werkstoffen im Rahmen des Lebensmittel- und Bedarfsgegenständegesetzes für den Trinkwasserbereich (KTW-Empfehlungen)" aus drei Teilen aufgebaut, den Positivlisten verwendbarer Ausgangsstoffe zur Herstellung der Werkstoffe und Materialien, den vorgeschriebenen Prüfverfahren (Migrationstestverfahren) und den in den Prüfungen einzuhaltenden Prüfwerten mit Grenzwertcharakter. Damit entspricht sie auch dem prinzipiellen Aufbau des zukünftigen "Europäischen Akzeptanzsystems für Bauprodukte im Kontakt mit Trinkwasser (EAS)".

Aus dem Stand der Technik sind bereits viele Härter für Epoxidharze bekannt. Zum Beispiel offenbart die WO 2005/123802 A1 einen Härter für Epoxidharze, der allerdings als zwingenden Bestandteil Acrylnitril beinhaltet. Acrylnitril ist jedoch eine hochgiftige und kanzerogene Substanz und darf daher bei Epoxidharzen, die für die Applikation bei Trinkwassersystemen geeignet sein sollen, nicht verwendet werden.

Die US 2004/0048985 A1 offenbart Michael-Additions-Addukte von polyfunktionellen Acrylaten und Aminoterminierten Polyolefinen. Das Acrylat ist hierbei zumindest bifunktional. Es wird ein Polymer erhalten, welches endständig Doppelbindungen und sekundäre Aminogruppen enthält. Es sollte sich daher nur bedingt zum Vernetzen von Epoxidharzen eignen.

In der japanischen Offenlegungsschrift 4-330044 wird ein Michael-Additions-Produkt von n-Butylacrylat und m-Xylylendiamin bei der Herstellung von Kunststoffen beschrieben.

Somit ist es Aufgabe vorliegender Erfindung, einen Epoxidhärter bereitzustellen, der möglichst ungiftig, möglichst nicht ätzend sowie konform mit der KTW-Richtlinie ist. Weiterhin soll der Härter möglichst positive Eigenschaften, wie hohe Beständigkeit und gute Verarbeitbarkeit aufweisen. Weiterhin ist es Aufgabe vorliegender Erfindung, ein möglichst einfaches und kostengünstiges Verfahren zur Aushärtung von Epoxidharzen bereitzustellen.

Diese Aufgabe wird bezüglich des Härters mit den Merkmalen des Patentanspruchs 1, bezüglich des Verfahrens mit den Merkmalen des Patentanspruchs 15 gelöst. Verwendungsmöglichkeiten des Härters werden mit Patentanspruch 24 genannt. Dabei stellen die abhängigen Ansprüche vorteilhafte Weiterbildungen dar.

Erfindungsgemäß wird somit ein Härter für Epoxidharze, enthaltend als Komponente a) mindestens ein zumindest einfaches Michael-Addukt eines zumindest bifunktionellen Amins (A) und eines Acrylsäurederivates, wobei das Amin (A) ausgewählt ist aus der Gruppe bestehend aus 1-Amino-3-aminomethyl-3,5,5-trimethylcyclohexan (IPD), 1,3-Benzendimethanamin (MXDA), Bis(4-aminocyclohexyl)methan, Bis(4-amino-phenyl)-methan, 1,4-Diaminobutan, 2-Methyl-1,5-diaminopentan (MPMD), Dimethylaminoethanol, Hexamethylendiamin, einer Mischung aus 1,6-Diamino-2,2,4-trimethylhexan und 1,6-Diamino-2,4,4-trimethylhexan (TMD), 1,3-Phenylendiamin, 2,4,6-Triamino-1,3,5-triazin, 1,2-Diaminocyclohexan (DCH), 1,3-Propandiamin, Ethylendiamin (EDA), Diethylentriamin (DETA), Triethylentetramin (TETA), Tetraethylenpentamin (TEPA), Pentaethylenhexamin (PEHA), N-Ethylaminopiperazin (N-AEP), Dipropylentriamin (DPTA), Polyoxypropylendiamin, Polyoxypropylentriamin, 1,3-Bisaminomethylcyclohexan (1,3-BAC), 3-(2-Aminoethyl)-aminopropylamin (N₃-Amin), N,N'-Bis(3-aminopropyl)-ethylendiamin (N₄-Amin), 1,3-2,5-(2,6)-Bis-(aminomethyl)-bicyclo[2.2.1]heptan (NBDA), Bis(aminomethyl)-tricyclodecan (TCD-Amin); und zusätzlich als Komponente b) zumindest ein Addukt aus einem Epoxid und dem zumindest bifunktionellen Amin (A), bereitgestellt.

Es hat sich gezeigt, dass die Komponente a) (Michael-Addukt) des Härters besonders vorteilhafte Eigenschaften bezüglich der thermischen Stabilität aufweisen. Es ist bekannt, dass Acrylnitril-Amin-Addukte eine geringe thermische Stabilität aufweisen, und eine Michael-Reversion ab ca. 60 °C stattfindet. Diese Temperaturen können leicht bei Aushärtung von reaktiven Epoxidharzen auftreten. Somit erfolgt bei Verwendung von acrylnitrilhaltigen Epoxidhärtern eine teilweise Freisetzung des hochgiftigen Acrylnitrils in die Umgebung, beispielsweise Luft oder Trinkwasser. Die oben genannten Michael-Addukte des erfindungsgemäßen Härters zeichnen sich durch eine hohe thermische Stabilität aus, wobei hier eine Michael-Reversion erst ab ca. 150 °C zu beobachten ist. Somit sind die Michael-Addukte unter den Verwendungsbedingungen, nämlich bei Aushärtung eines Epoxidharzes, stabil und setzen keine giftigen und/oder ätzenden Abbauprodukte in die Umgebung frei.

In einer vorteilhaften Weiterbildung entspricht das Acrylsäurederivat der allgemeinen Formel I 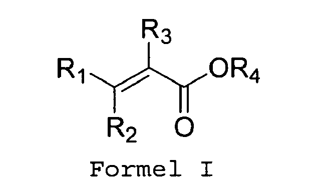 wobei R₁, R₂, R₃ und R₄ unabhängig voneinander ausgewählt sind aus der Gruppe bestehend aus Wasserstoff, linearen oder verzweigten aliphatischen Resten mit 1 bis 18 Kohlenstoffatomen, linearen oder verzweigten araliphatischen Resten mit 1 bis 18 Kohlenstoffatome und/oder aromatischen oder heteroaromatischen Resten mit 6 bis 20 Kohlenstoffatomen.

Weiter bevorzugt ist es, wenn das Amin (A) MXDA ist und das Acrylsäurederivat der allgemeinen Formel II entspricht, 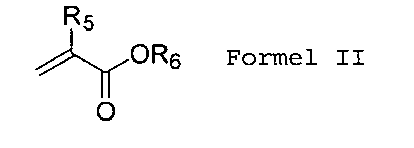 wobei R₅ ausgewählt ist aus der Gruppe bestehend aus Wasserstoff oder Methyl und R₆ ausgewählt ist aus linearen oder verzweigten aliphatischen Resten mit 1 bis 12 Kohlenstoffatomen.

Insbesondere ist es bevorzugt, wenn die Komponente a) des Härters (Michael-Addukt) der Formel III entspricht, also durch die Addition von MXDA und n-Butylacrylat gebildet ist.

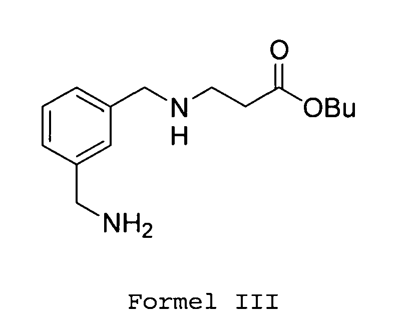

Bei der Komponente b) des Härters ist das Epoxid bevorzugt ausgewählt aus der Gruppe bestehend aus p.t.-Butylphenylglycidylether, o-Kresylglycidylether, Phenylglycidylether, primärer, sekundärer und/oder tertiärer Butylglycidylether, C₁₂/C₁₄ und/oder C₁₃/C₁₅-Fettsäureglycidylether, 2-Ethylhexylglycidylether, 2-Propylheptylglycidylether, Ethylenoxid, Propylenoxid, Butylenoxid, Epichlorhydrin und/oder Glycidol.

Die vorteilhaften Eigenschaften des Härters sind dabei nicht vom Mischungsverhältnis der Komponenten a) und b) abhängig. Vorteilhafterweise beträgt jedoch das Mischungsverhältnis der Komponenten bezogen auf das Massenverhältnis zwischen 95:5 und 5:95, bevorzugt zwischen 70:30 und 30:70, besonders bevorzugt zwischen 60:40 und 40:60.

Das Feineinstellen der Eigenschaften des Härters kann dadurch erfolgen, dass freie Amingruppen, die in der Zusammensetzung enthalten sind, durch Zugabe eines Epoxids verkappt werden. Das Epoxid ist dabei bevorzugt ausgewählt aus der Gruppe bestehend aus p.t.-Butylphenylglycidylether, o-Kresylglycidylether, Phenylglycidylether, primärer, sekundärer und/oder tertiärer Butylglycidylether, C₁₂/C₁₄ und/oder C₁₃/C₁₅-Fettsäureglycidylether, 2-Ethylhexylglycidylether, 2-Propylheptylglycidylether, Ethylenoxid, Propylenoxid, Butylenoxid, Epichlorhydrin, Glycidol, Bisphenol A, F-Diglycidylether und/oder Mischungen hieraus. Das Epoxid kann dabei bezüglich der Stoffmenge der freien Aminogruppen in der Zusammensetzung unterstöchiometrisch, stöchiometrisch, aber auch überstöchiometrisch eingesetzt werden, je nachdem, welche Eigenschaften des Härters gewünscht werden.

Insbesondere ist es von Vorteil, wenn der Härter einen möglichst geringen Anteil an freiem Amin (A) bezüglich der Gesamtmasse des Härters enthält. Unter freiem Amin wird erfindungsgemäß verstanden, dass das Amin nicht als Addukt, beispielsweise mit einem Acrylat oder Epoxid vorliegt, sondern ungebunden in der Zusammensetzung enthalten ist.

Insbesondere beträgt der Anteil an freiem Amin (A) dabei weniger als 20 Gew.-%, bevorzugt weniger als 10 Gew.-%, besonders bevorzugt weniger als 5 Gew.-%, allerdings sind auch geringere Mengen, wie beispielsweise < 2,5 Gew.-% oder < 2 Gew.-% möglich und günstig. Der geringe Anteil an freiem Amin (A) verringert dabei die ätzenden Eigenschaften des Härters, so dass die Klassifizierung des Härters nicht als ätzend, sondern als reizend erfolgen kann. Durch einen geringen Aminanteil verringern sich auch die Gefahren und Sicherheitsmaßnahmen bei der Applikation.

Weiterhin ist es von Vorteil, wenn der Härter keine flüchtigen organischen Bestandteile (VOC), insbesondere Benzylalkohol, enthält. Dadurch ist ebenso gewährleistet, dass die Zusammensetzung nach Aushärten keine Schadstoffe an die Umgebung abgibt.

Insbesondere kann bei dem Härter auf leicht freisetzbare Giftstoffe, wie beispielsweise Acrylnitril, verzichtet werden. Somit muss die Zusammensetzung unter bestimmten Bedingungen nicht als toxisch klassifiziert werden, wobei sich selbstverständlich die Vorteile von nicht-toxischen Zusammensetzungen ergeben.

Der Härter kann dabei auch die üblichen weiteren Additive, die dem Fachmann bekannt sind, enthalten, insbesondere Beschleuniger, Modifizierungsmittel Verlaufsmittel, Dispergiermittel, Netzmittel und/oder Mischungen hieraus.

Vorteilhafterweise beträgt das Aminwasserstoffäquivalent des Härters höchstens 1.000 g/H-Äquivalent, bevorzugt höchstens 500 g/H-Äquivalent, besonders bevorzugt höchstens 250 g/H-Äquivalent.

Überraschenderweise hat sich gezeigt, dass sich der Härter durch seine niedrige Viskosität positiv auszeichnet. Insbesondere ist dabei die Viskosität bei 25 °C kleiner 20.000 mPas, bevorzugt kleiner 5.000 mPas, besonders bevorzugt kleiner 1.000 mPas. Dies bietet insbesondere den Vorteil, dass die Zusammensetzung beispielsweise bei der Aushärtung von Epoxidharzen ohne weitere Verdünnung durch beispielsweise Zugabe von organischen Lösungsmitteln applizierbar ist, da die Epoxidharze dann durch den Härter verdünnt werden können.

Ebenso hat sich überraschenderweise gezeigt, dass der Härter eine helle Eigenfarbe aufweist. Gemessen auf der Gardner-Farbskala beträgt die Farbigkeit zwischen 0 und 10 Gardner, bevorzugt zwischen 0 und 5 Gardner.

Es wird ebenso ein Verfahren zur Aushärtung eines Epoxidharzes bereitgestellt, bei dem ein Mischen einer Zusammensetzung, enthaltend mindestens ein zumindest einfaches Michael-Addukt eines zumindest bifunktionellen Amins (A) und eines Acrylsäurederivates, wobei das Amin ausgewählt ist aus der Gruppe bestehend aus 1-Amino-3-aminomethyl-3,5,5-trimethylcyclohexan (IPD), 1,3-Benzehdimethanamin (MXDA), Bis(4-aminocyclohexyl)methan, Bis(4-aminophenyl)methan, 1,4-Diaminobutan, 2-Methyl-1,5-diaminopentan (MPMD), Dimethylaminoethanol, Hexamethylendiamin, einer Mischung aus 1,6-Diamino-2,2,4-trimethylhexan und 1,6-Diamino-2,4,4-trimethylhexan (TMD), 1,3-Phenylendiamin, 2,4,6-Triamino-1,3,5-triazin, 1,2-Diaminocyclohexan (DCH), 1,3-Propandiamin, Ethylendiamin (EDA), Diethylentriamin (DETA), Triethylentetramin (TETA), Tetraethylenpentamin (TEPA), Pentaethylenhexamin (PE-HA), N-Ethylaminopiperazin (N-AEP), Dipropylentriamin (DPTA), Polyoxypropylendiamin, Polyoxypropylentriamin, 1,3-Bisaminomethylcyclohexan (1,3-BAC), 3-(2-Aminoethyl)-aminopropylamin (N₃-Amin), N,N'-Bis(3-aminopropyl)-ethylendiamin (N₄-Amin), 1,3-2,5(2,6)-Bis-(aminomethyl)-bicyclo[2.2.1]heptan (NBDA), Bis-(aminomethyl)-tricyclodecan (TCD-Amin) mit mindestens einem noch nicht ausgehärteten Epoxidharz erfolgt.

Dabei eignet sich die Zusammensetzung von beliebigen Epoxidharzen, bevorzugt ist das Epoxidharz jedoch ausgewählt aus der Gruppe bestehend aus Bisphenol A-Diglycidylether, Bisphenol F-Diglycidylether, epox. Phenolnovolake, epox. Kresolnovolake und/oder Mischungen hieraus.

Besonders vorteilhaft lässt sich das Verfahren dann ausführen, wenn das noch nicht ausgehärtete Epoxidharz mit einer niedermolekularen Epoxidverbindung reaktiv verdünnt wird.

Als weiterer Vorteil des Verfahrens ist zu nennen, dass während des Aushärteprozesses sowie im Anschluss daran keine giftigen Stoffe, insbesondere Abbauprodukte der eingesetzten Substanzen, freigesetzt werden.

Überraschenderweise hat sich gezeigt, dass sich durch Verwendung des Michael-Adduktes als Härter für Epoxidharze besonders günstige Topfzeiten ergeben. Die Topfzeiten liegen, insbesondere zwischen 5 min und 600 min, bevorzugt zwischen 15 min und 300 min, besonders bevorzugt zwischen 30 min und 180 min.

Ebenso ist die Durchführung des Aushärtverfahrens in einem breiten Temperaturspektrum möglich, was eine weitere vorteilhafte Eigenschaft vorliegender Erfindung ist. Die Außentemperaturen können dabei zwischen -5 °C und 50 °C liegen.

Das Mischungsverhältnis des Michael-Addukts mit dem mindestens einem noch nicht ausgehärteten Epoxidharzes liegt dabei vorteilhafterweise zwischen 1,2 : 1 und 1 : 1,2, bevorzugt zwischen 1,1 : 1 und 1 : 1,1, besonders bevorzugt zwischen 1,05 : 1 und 1 : 1,05 H-Äquivalente : Epoxid-Äquivalente.

Vorteilhafterweise wird bei Durchführung des Verfahrens auf die Verwendung von Acrylnitril verzichtet.

Insbesondere ergeben sich Vorteile, wenn bei Durchführung des Verfahrens der eingangs beschriebene Härter verwendet wird.

Verwendungsmöglichkeiten einer Zusammensetzung, die mindestens ein zumindest einfaches Michael-Addukt eines zumindest bifunktionellen Amins und eines Acrylsäurederivates, wobei das Amin ausgewählt ist aus der Gruppe bestehend aus 1-Amino-3-aminomethyl-3,5,5-trimethylcyclohexan (IPD), 1,3-Benzendimethanamin (MXDA), Bis(4-aminocyclohexyl)methan, Bis(4-aminophenyl)methan, 1,4-Diaminobutan, 2-Methyl-1,5-diaminopentan (MPMD), Dimethylaminoethanol, Hexamethylendiamin, einer Mischung aus 1,6-Diamino-2,2,4-trimethylhexan und 1,6-Diamino-2,4,4-trimethylhexan (TMD), 1,3-Phenylendiamin, 2,4,6-Triamino-1,3,5-triazin, 1,2-Diaminocyclohexan (DCH), 1,3-Propandiamin, Ethylendiamin (EDA), Diethylentriamin (DETA), Triethylentetramin (TETA), Tetraethylenpentamin (TEPA), Pentaethylenhexamin (PEHA), N-Ethylaminopiperazin (N-AEP), Dipropylentriamin (DPTA), Polyoxypropylendiamin, Polyoxypropylentriamin, 1,3-Bisaminomethylcyclohexan (1,3-BAC), 3-(2-Aminoethyl)-aminopropylamin (N₃-Amin), N,N'-Bis(3-aminopropyl)-ethylendiamin (N₄-Amin), 1,3-2,5(2,6)-Bis-(aminomethyl)-bicyclo-[2.2.1]heptan (NBDA), Bis(aminomethyl)-tricyclodecan (TCD-Amin) enthält, sind Anwendungsmöglichkeiten als Härter, Beschleuniger, Weichmacher und/oder Haftvermittler für reaktive Polymere. Dieselben Verwendungsmöglichkeiten sind ebenso für den eingangs beschriebenen Härter vorgesehen.

Die reaktiven Polymere sind dabei insbesondere ausgewählt aus der Gruppe bestehend aus Epoxidharzen, Polyurethanen, Polyestern und/oder Aminoplasten.

### Beispiel 1: Michael-Addukt

Zu 228 g MXDA (1,7 mol) werden bei 30 °C 254 g n-Butylacrylat (2 mol) innerhalb von 4 h zugetropft. Nach Beendigung des Zutropfens lässt man 4 h bei 30 °C und 16 h bei Raumtemperatur weiterreagieren.

Man erhält eine niedrigviskose, leicht gelblich gefärbte Flüssigkeit, mit einem für gesättigte Ester charakteristischen Geruch. Viskosität (25 °C)= 29 mPas, Aminzahl= 390 mg KOH/g, Gardner-Farbzahl: 1,5

### Beispiel 2: Isoliertes Amin-Addukt

Zu 206 g DETA (2 mol) werden bei 80 °C 230 g p.-t.-Butylglycidether (1 mol) innerhalb von 2 h getropft. Nach Beendigung des Zutropfens wird noch 2 h bei derselben Temperatur weitergerührt, dann ein Vakuum von 10 mbar angelegt und die Temperatur langsam auf 170 °C erhöht. Dabei destillierten 103 g DETA.

Man erhält eine viskose, opake, leicht gelblich gefärbte Flüssigkeit mit aminischem Geruch. Viskosität (25 °C)= 110'000 mPas, Aminzahl= 410 mg KOH/g, Gardner-Farbzahl: 3,5

### Beispiel 3: Erfindungsgemäßer Härter

38,3 g des Michael-Addukts aus Beispiel 1 werden mit 33,7 g des isolierten Amin-Adduktes aus Beispiel 2 bei Raumtemperatur gemischt. Es wird ein Härter für Epoxidharze mit folgenden Eigenschaften erhalten: Aminäquivalent= 107 g/Äquiv., Viskosität (25 °C)= 360 mPas, Gardner-Farbzahl= 2,5

### Beispiel 4: Ausprüfung des Härters aus Beispiel 3

64 g eines reaktivverdünnten Epoxidharzes mit einem Epoxidäquivalentgewicht von 193 g/Äquivalent (Polypox E 403, UPPC AG) werden bei 23 °C mit 36 g des Härters aus Beispiel 3 2 min lang intensiv vermischt.

Man lässt in einem thermisch isolierten Gefäß diese Mischung aushärten und misst die Zeit, bis ein starker Viskositätsanstieg erfolgt, in diesem Falle nach 160 min (Topfzeit).

In einem andern Experiment wird eine analoge Mischung unmittelbar nach den 2 min Mischzeit in Formen zu einem 2 mm starken Film gegossen, der bei verschiedenen Klimata aushärtet. Die Filme werden bezüglich ihrer Härteentwicklung (Shore D-Härte) und Oberflächeneigenschaften nach vollständiger Aushärtung beurteilt.

### Ergebnisse

Bei 23 °C/50 % rel. LF wird eine Shore D Härte von 55 bereits nach 21 h Aushärtung erreicht. Der Endwert von 73 wird nach 40 h erreicht.

Die Oberfläche ist sehr leicht gestört, zeigt typischen Speckglanz und ist klebfrei.

Bei 13 °C/80 % rel. LF wird eine Shore D Härte von 55 bereits nach 45 h Aushärtung erreicht. Der Endwert von 73 wird nach 64 h erreicht.

Die Oberfläche ist leicht gestört, zeigt typischen Speckglanz und ist klebfrei.

Bei 7 °C/ 50 % rel. LF wird eine Shore D Härte von 40 bereits nach 48 h Aushärtung erreicht. Der Endwert von 56 wird nach 64 h erreicht.

Die Oberfläche ist gestört, seidenmatt und leicht klebrig.

## Patentansprüche

1. Härter für Epoxidharze, enthaltend
a) mindestens ein zumindest einfaches Michael-Addukt eines zumindest bifunktionellen Amins (A) und eines Acrylsäurederivates, wobei das Amin (A) ausgewählt ist aus der Gruppe bestehend aus 1-Amino-3-aminomethyl-3,5,5-trimethylcyclohexan (IPD), 1,3-Benzendimethanamin (MXDA), Bis(4-aminocyclohexyl)methan, Bis(4-aminophenyl)-methan, 1,4-Diaminobutan, 2-Methyl-1,5-diaminopentan (MPMD), Dimethylaminoethanol, Hexamethylendiamin, einer Mischung aus 1,6-Diamino-2,2,4-trimethylhexan und 1,6-Diamino-2,4,4-trimethylhexan (TMD), 1,3-Phenylendiamin, 2,4,6-Triamino-1,3,5-triazin, 1,2-Diaminocyclohexan (DCH), 1,3-Propandiamin, Ethylendiamin (EDA), Diethylentriamin (DETA), Triethylentetramin (TETA), Tetraethylenpentamin (TEPA), Pentaethylenhexamin (PEHA), N-Ethylaminopiperazin (N-AEP), Dipropylentriamin (DPTA), Polyoxypropylendiamin, Polyoxypropylentriamin, 1,3-Bisaminomethylcyclohexan (1,3-BAC), 3-(2-Aminoethyl)-aminopropylamin (N₃-Amin), N,N'-Bis(3-aminopropyl)-ethylendiamin (N₄-Amin), 1,3-2,5(2,6)-Bis-(aminomethyl)-bicyclo[2.2.1]heptan (NBDA), Bis(aminomethyl)-tricyclodecan (TCD-Amin); und zusätzlich
b) zumindest ein Addukt aus einem Epoxid und dem zumindest bifunktionellen Amin (A).

2. Härter nach Anspruch 1, **dadurch gekennzeichnet, dass** das Acrylsäurederivat der allgemeinen Formel I entspricht 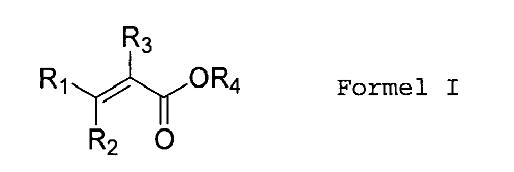 wobei R₁, R₂, R₃ und R₄ unabhängig voneinander ausgewählt sind aus der Gruppe bestehend aus Wasserstoff, linearen oder verzweigten aliphatischen Resten mit 1 bis 18 Kohlenstoffatomen, linearen oder verzweigten araliphatischen Resten mit 1 bis 18 Kohlenstoffatome und/oder aromatischen oder heteroaromatischen Resten mit 6 bis 20 Kohlenstoffatomen.

3. Härter nach einem der vorhergehenden Ansprüche, **dadurch gekennzeichnet, dass** das Amin MXDA ist und das Acrylsäurederivat der allgemeinen Formel 11 entspricht, 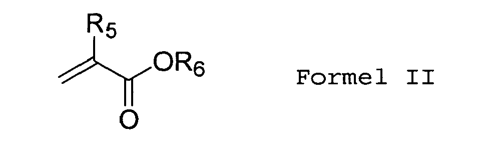 wobei
R₅ ausgewählt ist aus der Gruppe bestehend aus Wasserstoff oder Methyl und
R₆ ausgewählt ist aus linearen oder verzweigten aliphatischen Resten mit 1 bis 12 Kohlenstoffatomen.

4. Härter nach einem der vorhergehenden Ansprüche, **dadurch gekennzeichnet, dass** das Michael-Addukt der Formel III entspricht.

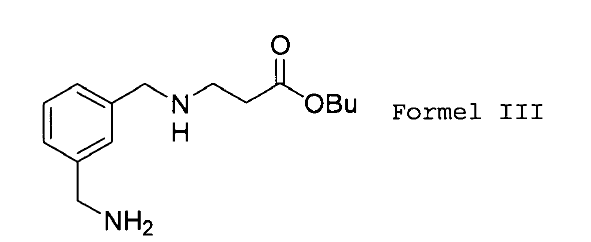

5. Härter nach einem der vorhergehenden Ansprüche, **dadurch gekennzeichnet, dass** das Epoxid ausgewählt ist aus der Gruppe bestehend aus p.t.-Butylphenylglycidylether, o-Kresylglycidylether, Phenylglycidylether, primärer, sekundärer und/oder tertiärer Butylglycidylether, C₁₂/C₁₄ und/oder C₁₃/C₁₅-Fettsäureglycidylether, 2-Ethylhexylglycidylether, 2-Propylheptylglycidylether, Ethylenoxid, Propylenoxid, Butylenoxid, Epichlorhydrin und/oder Glycidol.

6. Härter nach einem der vorhergehenden Ansprüche, **dadurch gekennzeichnet, dass** das Mischungsverhältnis zwischen dem Michael-Addukt und dem Addukt aus einem Epoxid und dem zumindest bifunktionellen Amin bezogen auf das Massenverhältnis zwischen 95:5 und 5:95, bevorzugt zwischen 70:30 und 30:70, besonders bevorzugt zwischen 60:40 und 40:60 liegt.

7. Härter nach einem der vorhergehenden Ansprüche, **dadurch gekennzeichnet, dass** das zumindest einfache Michael-Addukt eines zumindest bifunktionellen Amins (A) und eines Acrylsäurederivates und/oder das zumindest eine Addukt aus einem Epoxid und dem zumindest bifunktionellen Amin (A) mit einem Epoxid, ausgewählt aus der Gruppe bestehend aus p.t.-Butylphenylglycidylether, o-Kresylglycidylether, Phenylglycidylether, primärer, sekundärer und/oder tertiärer Butylglycidylether, C₁₂/C₁₄ und/oder C₁₃/C₁₅-Fettsäureglycidylether, 2-Ethylhexylglycidylether, 2-Propylheptylglycidylether, Ethylenoxid, Propylenoxid, Butylenoxid, Epichlorhydrin, Glycidol, Bisphenol A-Diglycidylether, Bisphenol F-Diglycidylether und/oder Mischungen hieraus oder durch Reaktion mit ethylenisch ungesättigen Monomeren oder Aldehyden endverkappt ist.

8. Härter nach einem der vorhergehenden Ansprüche, **dadurch gekennzeichnet, dass** der Anteil an freiem Amin (A) bezüglich der Gesamtmasse kleiner 20 Gew.-%, bevorzugt kleiner 10 Gew.-%, besonders bevorzugt kleiner 5 Gew.-% ist.

9. Härter nach einem der vorhergehenden Ansprüche, **dadurch gekennzeichnet, dass** sie keine flüchtigen organischen Bestandteile (VOC), insbesondere Benzylalkohol, enthält.

10. Härter nach einem der vorhergehenden Ansprüche, **dadurch gekennzeichnet, dass** sie frei von Acrylnitril ist.

11. Härter nach einem der vorhergehenden Ansprüche, **dadurch gekennzeichnet, dass** weitere Additive, ausgewählt aus der Gruppe bestehend aus Beschleunigern, Modifizierungsmitteln, Verlaufsmitteln, Dispergiermitteln, Netzmitteln und/oder Mischungen hieraus enthalten sind.

12. Härter nach einem der vorhergehenden Ansprüche, **dadurch gekennzeichnet, dass** das Aminwasserstoffäquivalentgewicht höchstens 1.000 g/H-Äquivalent, bevorzugt höchstens 500 g/H-Äquivalent, besonders bevorzugt höchstens 250 g/H-Äquivalent beträgt.

13. Härter nach einem der vorhergehenden Ansprüche, **dadurch gekennzeichnet, dass** ihre Viskosität bei 25 °C kleiner 20.000 mPas, bevorzugt kleiner 5.000 mPas, besonders bevorzugt kleiner 1.000 mPas ist.

14. Härter nach einem der vorhergehenden Ansprüche, **dadurch gekennzeichnet, dass** sie eine Farbigkeit nach der Gardner-Farbskala zwischen 0 und 10 Gardner, bevorzugt zwischen 0 und 5 Gardner aufweist.

15. Verfahren zur Aushärtung eines Epoxidharzes durch Mischen einer Zusammensetzung, enthaltend mindestens ein zumindest einfaches Michael-Addukt eines zumindest bifunktionellen Amins (A) und eines Acrylsäurederivates, wobei das Amin ausgewählt ist aus der Gruppe bestehend aus 1-Amino-3-aminomethyl-3,5,5-trimethylcyclohexan (IPD), 1,3-Benzendimethanamin (MXDA), Bis(4-aminocyclohexyl)methan, Bis(4-aminophenyl)-methan, 1,4-Diaminobutan, 2-Methyl-1,5-diaminopentan (MPMD), Dimethylaminoethanol, Hexamethylendiamin, einer Mischung aus 1,6-Diamino-2,2,4-trimethylhexan und 1,6-Diamino-2,4,4-trimethylhexan (TMD), 1,3-Phenylendiamin, 2,4,6-Triamino-1,3,5-triazin, 1,2-Diaminocyclohexan (DCH), 1,3-Propandiamin, Ethylendiamin (EDA), Diethylentriamin (DETA), Triethylentetramin (TETA), Tetraethylenpentamin (TEPA), Pentaethylenhexamin (PEHA), N-Ethylaminopiperazin (N-AEP), Dipropylentriamin (DPTA), Polyoxypropylendiamin, Polyoxypropylentriamin, 1,3-Bisaminomethylcyclohexan (1,3-BAC), 3-(2-Aminoethyl)-aminopropylamin (N₃-Amin), N,N'-Bis(3-aminopropyl)-ethylendiamin (N₄-Amin), 1,3-2,5(2,6)-Bis-(aminomethyl)-bicyclo[2.2.1]heptan (NBDA), Bis(aminomethyl)-tricyclodecan (TCD-Amin) mit mindestens einem noch nicht ausgehärteten Epoxidharz.

16. Verfahren nach Anspruch 15, **dadurch gekennzeichnet, dass** das mindestens eine Epoxidharz ausgewählt ist aus der Gruppe bestehend aus Bisphenol A-Diglycidylether, Bisphenol F-Diglycidylether, epox. Phenolnovolake, epox. Kresolnovolake und/oder Mischungen hieraus.

17. Verfahren nach einem der Ansprüche 15 oder 16, **dadurch gekennzeichnet, dass** das noch nicht ausgehärtete Epoxidharz reaktiv mit mindestens einer niedermolekularen Epoxidverbindung, bevorzugt ausgewählt aus der Gruppe bestehend aus o-Kresylglycidylether, p.t.-Butylphenylglycidylether, C₁₂/C₁₄- und/oder C_{13/}C₁₅-Fettalkoholglycidylether, 2-Ethylhexylglycidylether, 1,4-Butandioldiglycidylether, 1,6-Hexandioldiglycidylether, Neopentylglycoldiglycidylether und/oder Mischungen hieraus, verdünnt wird.

18. Verfahren nach einem der Ansprüche 15 bis 17, **dadurch gekennzeichnet, dass** während des Aushärteprozesses sowie im Anschluss daran keine giftigen Stoffe, insbesondere Abbauprodukte der eingesetzten Substanzen, freigesetzt werden.

19. Verfahren nach einem der Ansprüche 15 bis 18, **dadurch gekennzeichnet, dass** die Topfzeit zwischen 5 min und 600 min, bevorzugt zwischen 15 min und 300 min, besonders bevorzugt zwischen 30 min und 180 min beträgt.

20. Verfahren nach einem der Ansprüche 15 bis 19, **dadurch gekennzeichnet, dass** es bei Außentemperaturen zwischen -5 °C und 50 °C durchgeführt wird.

21. Verfahren nach einem der Ansprüche 15 bis 20, **dadurch gekennzeichnet, dass** das Mischungsverhältnis der Zusammensetzung mit dem mindestens einen noch nicht ausgehärteten Epoxidharz zwischen 1,2 : 1 und 1 : 1,2, bevorzugt zwischen 1,1 : 1 und 1 : 1,1, besonders bevorzugt zwischen 1,05 : 1 und 1 : 1,05 H-Äquivalente : Epoxid-Äquivalente beträgt.

22. Verfahren nach einem der Ansprüche 15 bis 21, **dadurch gekennzeichnet, dass** die Zusammensetzung frei von Acrylnitril ist.

23. Verfahren nach einem der Ansprüche 15 bis 22, **dadurch gekennzeichnet, dass** ein Härter nach einem der Ansprüche 1 bis 14 verwendet wird.

24. Verwendung einer Zusammensetzung, enthaltend mindestens ein zumindest einfaches Michael-Addukt eines zumindest bifunktionellen Amins und eines Acrylsäurederivates, wobei das Amin ausgewählt ist aus der Gruppe bestehend aus 1-Amino-3-aminomethyl-3,5,5-trimethylcyclohexan (IPD), 1,3-Benzendimethanamin (MXDA), Bis(4-aminocyclohexyl)methan, Bis(4-aminophenyl)methan, 1,4-Diaminobutan, 2-Methyl-1,5-diaminopentan (MPMD), Dimethylaminoethanol, Hexamethylendiamin, einer Mischung aus 1,6-Diamino-2,2,4-trimethylhexan und 1,6-Diamino-2,4,4-trimethylhexan (TMD), 1,3-Phenylendiamin, 2,4,6-Triamino-1,3,5-triazin, 1,2-Diaminocyclohexan (DCH), 1,3-Propandiamin, Ethylendiamin (EDA), Diethylentriamin (DETA), Triethylentetramin (TETA), Tetraethylenpentamin (TEPA), Pentaethylenhexamin (PEHA), N-Ethylaminopiperazin (N-AEP), Dipropylentriamin (DPTA), Polyoxypropylendiamin, Polyoxypropylentriamin, 1,3-Bisaminomethylcyclohexan (1,3-BAC), 3-(2-Aminoethyl)-aminopropylamin (N₃-Amin), N,N'-Bis(3-aminopropyl)-ethylendiamin (N₄-Amin), 1,3-2,5(2,6)-Bis-(aminomethyl)-bicyclo[2.2.1]-heptan (NBDA), Bis(aminomethyl)-tricyclodecan (TCD-Amin) als Härter, Beschleuniger, Weichmacher und/oder Haftvermittler für reaktive Polymere.

25. Verwendung eines Härters nach einem der Ansprüche 1 bis 14 als Härter, Beschleuniger, Weichmacher und/oder Haftvermittler für reaktive Polymere.

26. Verwendung nach einem der Ansprüche 24 oder 25, **dadurch gekennzeichnet, dass** die reaktiven Polymere ausgewählt sind aus der Gruppe bestehend aus Epoxidharzen, Polyurethanen, Polyestern und/oder Aminoplasten.
